# EUROPEAN PATENT APPLICATION

(11) **EP 4 447 005 A1**
(43) Date of publication of application: **16.10.2024**
(21) Application number: 24170222.4
(22) Date of filing: 15.04.2024
(51) Int. Cl.: G06V 20/56, G06V 10/82, G06V 20/52

(54) **DETECTION NETWORK BASED ON EMBEDDING DISTANCE MODELS**

(30) Priority: 14.04.2023 US 202318134783
(71) Applicant: Google LLC, Mountain View, CA 94043 (US)
(72) Inventor: SHIN, Dongeek, Mountain View, 94043 (US)
(74) Representative: Chettle, John Edward

(57) **Abstract**

The present disclosure provides a space analytics system configured to determine the location of a vehicle using on-car camera snapshots to feature match against a pre-calibrated map. The system may estimate the location of a vehicle using the pre-calibrated map based on embeddings from reference images taken of the parking spot. The system may determine the location of the vehicle based on comparing reference image embeddings to real-time image embeddings and determining which comparison yields the embedding distance scores below the required threshold for a match.

## Description

### BACKGROUND

Existing parking management systems can detect the availability of parking spaces on a space-by-space basis by positioning a sensor within each parking space. Each sensor may be connected to a central system, such that it can detect when a vehicle enters or leaves the parking space. Some parking management systems can also include multiple cameras or additional sensors to detect movement through the parking lot, such as in pathways in addition to the spaces. The hardware installation and maintenance of such existing systems is expensive and time consuming, particularly for larger parking lots with numerous spaces.

### SUMMARY

The present disclosure provides a space analytics system configured to determine the location of a vehicle using on-car camera snapshots to feature match against a pre-calibrated map. The system may estimate the location of a vehicle using the pre-calibrated map based on embeddings from reference images taken of the parking spot. The system may determine the location of the vehicle based on comparing reference image embeddings to real-time image embeddings and determining which comparison yields the embedding distance scores below the required threshold for a match. Additionally, by utilizing embeddings to generate a dynamic map of the parking lot, the system does not require a detailed 3D mapping of the parking lot.

In accordance with some embodiments of the disclosure, a method, executed by one or more processors, may comprise receiving, from a vehicle camera system associated with a vehicle, a plurality of real-time images associated with an area at which the vehicle is located, converting the plurality of real-time image embeddings, based on the features within each of the real-time images, comparing, by the one or more processors using a trained neural network model, the plurality of real-time embeddings to a plurality of reference image embeddings, wherein the reference image embeddings are based on features within a plurality of reference images, determining an embedding distance for each real-time image embedding based on the comparison with the plurality of reference embeddings, and determining, based on the embedding distances, a location of the vehicle.

According to some aspects of the disclosure, the method may further comprise generating a map of a physical area captured by the plurality of reference images. Further, in some examples, the method may also comprise updating the map based on the determined position of the vehicle.

According to some aspects of the disclosure, the method may further comprise one or more of the processors training the neural network model by receiving the plurality of reference images, associating a physical location to each reference image and training the neural network model, using the plurality of reference images to generate the plurality of reference image embeddings.

According to some aspects of the disclosure, the plurality of reference images may be images captured of a designated area. Further, the plurality of reference images may comprise various angles of the designated area. In some examples, the system may activate the vehicle camera system when the vehicle enters a radius of the designated area. The vehicle camera system may selectively send the real-time images to one or more of the processors when the vehicle is not in motion.

According to some aspects of the disclosure, the reference images may be indexed based on the geographic location where they images were captured.

In accordance with some embodiments of the disclosure, a system, comprising a memory, and a plurality of processors, maybe configured to collect, by a vehicle camera system, a plurality of real-time images associated with an area at which the vehicle is located, convert the plurality of real-images into a plurality of real-time image embeddings, based on the features within each of the real-time images, compare, using a trained neural network model, the plurality of real-time image embeddings to a plurality of reference image embeddings, wherein the reference image embeddings are based on features with a plurality of reference images, determine an embeddings distance for each real-time image embedding based on the comparison with the plurality of reference image embeddings, and determine, based on the embedding distances, a location of the vehicle.

According to aspects of the disclosure, the plurality of processors may be further configured to generate a map of a physical area captured by the plurality of reference images. The processors may be further comprised to update the map based on the determined location of the vehicle.

According to aspects of the disclosure, the one or more processors may be further configured to train the neural network model by receiving the plurality of reference images, associating a physical location to each reference image, and training the neural network model, using the plurality of reference images to generate the plurality of reference image embeddings.

According to the aspects of the disclosure, the plurality of reference images may be images captured of a designated area, wherein the plurality of reference images may comprise various angles of the designated area. The system may activate the vehicle camera system when the vehicle enters a radius of the designated area. The camera system may further be configured to selectively send real-time images to the one or more processors when the vehicle is not in motion.

According to aspects of the disclosure, the reference images may be indexed based on a geographic location where the reference images were captured.

In accordance with some embodiments of the disclosure, a non-transitory computer readable medium storing instructions executable by one or more processors for performing a method of localization of a vehicle, the method comprising collecting, by a vehicle camera system associated with a vehicle, a plurality of real-time images associated with an area at which the vehicle is located, converting the plurality of real-time image embeddings, based on the features within each of the real-time images, comparing, by the one or more processors using a trained neural network model, the plurality of real-time embeddings to a plurality of reference image embeddings, wherein the reference image embeddings are based on features within a plurality of reference images, determining an embedding distance for each real-time image embedding based on the comparison with the plurality of reference embeddings, and determining, based on the embedding distances, a location of the vehicle.

According to aspects of the disclosure, the non-transitory computer readable medium instructions may further comprise generating a map of a physical area captured by the plurality of reference images. Further, the instructions may comprise updating the map based on the determined location of the vehicle.

### BRIEF DESCRIPTION OF THE DRAWINGS

FIG. 1 is a pictorial diagram illustrating an example system according to aspects of the disclosure.
FIG. 2 is a functional diagram of example systems in accordance with aspects of the disclosure.
FIG. 3 is a pictorial diagram illustrating an example system according to aspects of the disclosure.
FIG. 4 is a pictorial diagram illustrating an example mapping feature according to aspects of the disclosure.
FIG. 5 is a pictorial diagram illustrating an example vehicle location feature of the system according to aspects of the disclosure.
FIG. 6 is a pictorial diagram illustrating an example embedding distance model according to aspects of the disclosure.
FIG. 7 is a pictorial diagram illustrating example vehicle location techniques according to aspects of the disclosure.
FIG. 8 is a flow diagram illustrating an example method according to aspects of the disclosure.

### DETAILED DESCRIPTION

The present disclosure is directed to a space analytics system configured to locate a vehicle using an embedding distance model trained by a neural network. The neural network may be trained using images of the space selected to be monitored. The system may estimate the location of a vehicle without requiring use of additional or auxiliary hardware associated with a parking space. Such a location can be used to identify how many vehicles are within the area being tracked and where each of those vehicles is located. The system may further be configured to generate a parking availability map based on the estimated location of the vehicles.

For example, the system may be used in identifying the location of a parking spot at which a vehicle is parked. The identification is done based on a comparison of reference images to real time images captured by a vehicle. The system may be implemented via one or more applications that reside on a smartphone or incorporated into the vehicle infotainment system. The features described herein may be implemented as part of a navigation application, a parking application, or a combination of such applications. For example, the system in conjunction with a navigation application recommend available parking options near a destination. Upon the vehicle owner selecting a desired parking location, the system in conjunction with the navigation application direct the vehicle owner to the desired parking location. Further, the system may mark the vehicle's parking location based on the real-time images captured by the vehicle camera system. These applications may communicate with one or more servers that house reference images and allow for comparison of reference images with real time images. The comparison will typically involve determining the embedding distance of the reference image to the real time image. For example, the comparison may result in an embedding distance score that reflects the likelihood of a vehicle being in a particular location.

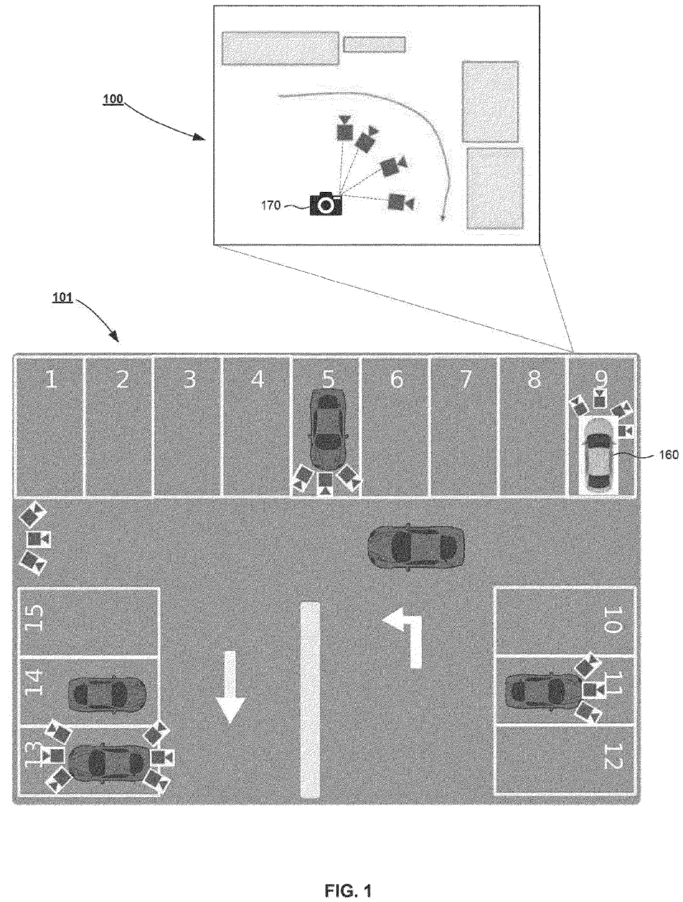

FIG. 1 illustrates an example calibration system 100 including a camera device 170 capable of capturing reference images at various angles. The reference images may be reduced to features within the images and those features are converted into embeddings. The reference image embeddings may be used to develop a calibrated map, such that the geographic locations where the reference images were captured are correlated. The reference image embeddings may further inform an embedding distance model to perform space analytics. The embedding distance model may be used to locate vehicle 160.

A camera system associated with vehicle 160 may capture real-time images of where the vehicle is positioned. The real-time images may be reduced to features within the images and those features are converted into embeddings. The real-time embeddings may be compared to the reference image embeddings using the embedding distance model. The vehicle 160 location may be approximated based on the lowest embedding distance score from the comparison of real-time image and reference images.

Data regarding the positioning of vehicle may be integrated onto map 101. For example, the position of the vehicle may be correlated with geographic positions on map 101. Map 101 may include markings, such as roadways, curbs, parking spaces, crosswalks, etc. In some examples, map 101 may integrate information regarding multiple vehicles onto map 101 to mark which parking spaces are available.

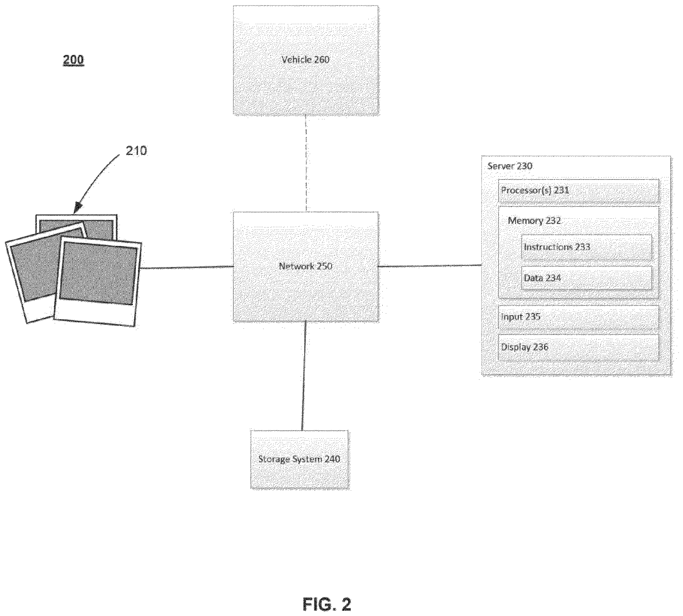

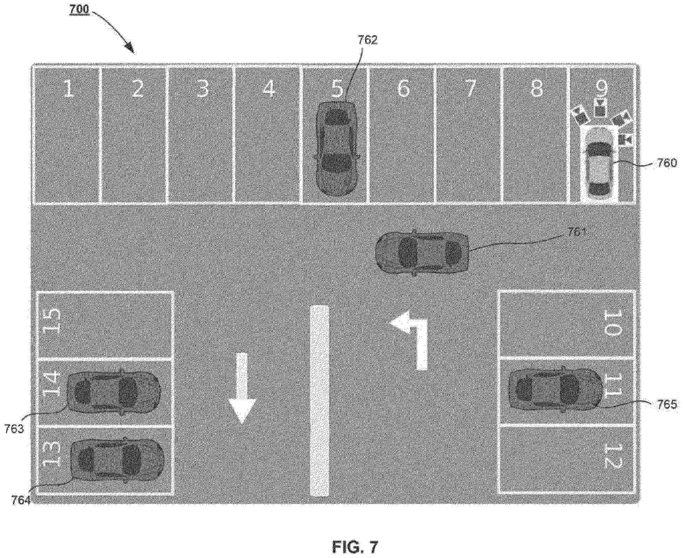

FIG. 2 illustrates an example system 200 in which the features described herein may be implemented. It should not be considered limiting to the scope of the disclosure or usefulness of the features described herein. In this example, system 200 includes reference images 210, a central server 230, a storage system 240, and a network 250. In some embodiments, system 200 may further be connected to a vehicle 260 that enters a radius of the system. System 200 may receive data from vehicle 260 and store information regarding vehicle 260 location, described in more detail in connection with FIG. 7. A person of ordinary skill in the art may appreciate that vehicle 260 may not be necessary for system 200 to function as described.

As shown, the central server 230 includes various components, such as one or more processors 231 and other components typically present in microprocessors, general purpose computers, or the like. Server 230 may also include a memory 232, input 235, and display 236. The server may be used to process information received from a user. The server may be used to communicate information to the user. The user may be a parking lot owner, a parking lot attendant, anyone in charge of monitoring a parking garage space, etc.

The one or more processors 231 may be any conventional processors, such as commercially available microprocessors. Alternatively, the one or more processors may be a dedicated device such as an application specific integrated circuit (ASIC) or other hardware-based processor. Although FIG. 2 functionally illustrates the processor and memory as being within the same block, it will be understood by those of ordinary skill in the art that the processor, computing device, or memory may include multiple processors, computing devices, or memories that may or may not be stored within the same physical housing. Similarly, the memory 232 may be a hard drive or other storage media located in a housing different from that of server 230. Accordingly, references to a processor or computing device will be understood to include references to a collection of processors or computing devices or memories that may or may not operate in parallel.

Memory 232 may store information that is accessible by the processors 231, including instructions 233 that may be executed by the processors 231, and data 234. The memory 232 may be of a type of memory operative to store information accessible by the processors 231, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. The subject matter disclosed herein may include different combinations of the foregoing, whereby different portions of the instructions 233 and data 234 are stored on different types of media.

Data 234 may be retrieved, stored, or modified by processors 231 in accordance with the instructions 233. For instance, although the present disclosure is not limited by a particular data structure, the data 234 may be stored in computer registers, in a relational database as a table having a plurality of different fields and records, XML documents, or flat files. The data 234 may also be formatted in a computer-readable format such as, but not limited to, binary values, ASCII or Unicode. Moreover, the data 234 may comprise information sufficient to identify the relevant information, such as numbers, descriptive text, proprietary codes, pointers, references to data stored in other memories (including other network locations) or information that is used by a function to calculate the relevant data.

The instructions 233 can be any set of instructions to be executed directly, such as machine code, or indirectly, such as scripts, by the processor 231. In that regard, the terms "instructions," "application," "steps," and "programs" can be used interchangeably herein. The instructions can be stored in object code format for direct processing by the processor, or in any other computing device language including scripts or collections of independent source code modules that are interpreted on demand or compiled in advance. Functions, methods, and routines of the instructions are explained in more detail below.

Server 230 may include display 236. Display 236 and other displays described herein may be any type of display, such as a monitor having a screen, a touch-screen, a projector, or a television. The display 236 of server 230 may electronically display information to a user via a graphical user interface ("GUI") or other types of user interfaces. For example, as will be discussed below, display 236 may electronically display a map interface with turn-by-turn directions between two or more geographic locations, corresponding road segments, and waypoints to maximize the overall probability of finding an open parking location when searching in a predefined area surrounding the final geographic location.

It should be understood that the server 230 may include other components which are not shown, such as a battery, charging input for the battery, signal processing components, etc. Such components may also be utilized in execution of the instructions 233.

The server 230 may be located at a node of network 250 and capable of directly and indirectly communicating with other nodes of network 250. The network 250 and intervening nodes described herein can be interconnected using various protocols and systems, such that the network can be part of the Internet, World Wide Web, intranets, wide area networks, or local networks. The network can utilize standard communications protocols and systems, such as Ethernet, Wi-Fi, and HTTP, protocols that are proprietary to one or more companies, and various combinations of the foregoing. Although certain advantages are obtained when information is transmitted or received as noted above, other aspects of the subject matter described herein are not limited to any particular manner of transmission of information.

As an example, each server 230 may include one or more servers capable of communicating with storage system 240 and receiving reference images 210 from multiple users via the network 250. For example, one or more users may upload reference images 210 of distinct designated areas via network 250 to create a single database of reference images at server 230. Server 230 may transmit and display this database to users via display 236. In this regard, server 230 may be considered client interface and may perform all or some of the features described above and herein.

In some examples, the server 230 may communicate with a driver device, such as to provide the driver with output indicating availability of parking spaces as detected by the server 230. The driver device may be any device capable of outputting information regarding the given area monitored by the server 230. For example, the driver device may be a mobile phone, smartphone, a wireless-enabled PDA, a tablet PC, a wearable computing device (e.g., a smartwatch, AR/VR headset, earbuds), laptops, hubs, gaming consoles, an in-vehicle navigation system, or any device that is capable of obtaining information via the Internet or other networks, etc.

A driver device may also be equipped with short range wireless pairing technology, such as a Bluetooth transceiver, or other wireless technology, such as WiFi, allowing for wireless coupling with other devices. Server 230 may also include an antenna, transmitter, and receiver that allows it to wirelessly couple to another device. The wireless coupling may be established using any of a variety of techniques, such as Bluetooth, Bluetooth low energy (BLE), UWB, WiFi, Ethernet, etc.

Storage system 240 may store data related to parking availability for retrieval in response to a parking reservation request. In some examples, storage system 240 may include a database. The database may store information, images, and/or metadata that may be provided by an application, such as a search service provider or a mapping application, in response to a search query or request.

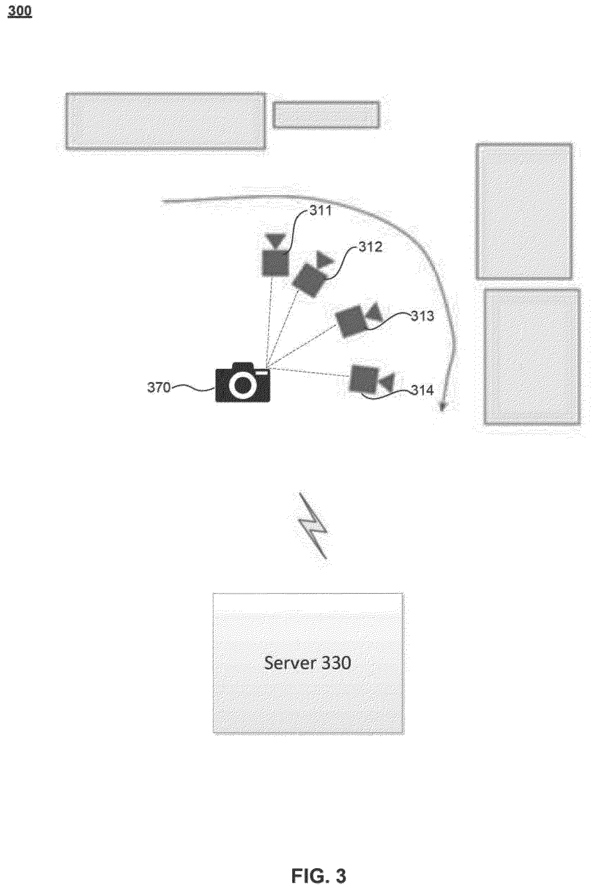

FIG. 3 illustrates an example calibration system 300 including an image capturing device 370 capable of capturing reference images at angles 311-314 depicted by camera icons. The image capturing device may transmit the reference images taken at angles 311-314 to a server 330.

The calibration system 300 may receive information uploaded by the user and without any input from a vehicle. The user may capture reference images of a designated area. The user may use any device capable of capturing images of the designated area. For example, the user may use a smartphone, digital camera, etc.

The user may capture one or more reference images of the designated area to train a neural network. The server 330 may be configured with instructions to train the neural network using the uploaded reference images. In some examples, to train the neural network more accurately, the calibration system 300 may require multiple images of the same area at different angles. The user may direct the image capturing device 370 to various angles of the designated area. In FIG. 3, the angles 311-314 at which the user captured the reference images with the image capturing device 370. For example, if the user owns one parking space, the user may take a grouping of photos rotating the perspective of the device 370 for each image.

The user may angle the image capturing device 370 such that they capture the potential images that may be captured by a vehicle parked in the designated area. For example, the user may capture reference images that would mirror the perspective of a vehicle parked with the front end in. As another example, the user may capture reference images that would mirror the perspective of a vehicle parked with the back end in.

In some embodiments, the image capturing device 370 may be equipped with an application that provides instructions or suggestions to the user as the reference images are captured. For example, the device may be a cell phone with a mobile application that provides feedback to the user regarding the photo quality of the reference images, such as "Image #3 is too dark" or "Is Image #3 blurry?". In some examples, the device may be equipped with an application that allows for the reference images to be sorted as they are captured. For example, the device may be a cell phone with a mobile application that groups the uploaded reference images based on metadata, such as geotags, of the photographs.

The embedding may contain high-level features to help form the mapping of the designated area. The more features captured by the user, the more robust the mapping will be with more fine feature variations. The user may take multiple variations of these perspectives to account for differences in vehicles, such as varying vehicle sizes or vehicle camera placement. In some examples, these variations may include capturing the images from a higher or lower perspective.

Reference images may be uploaded to the central server 330. The system may create an embedding for each reference image uploaded to the server. The embeddings may deconstruct the reference images into their simplest attributes, such as features within the reference images. The embeddings may be a representation of these features within the reference image. Features may be a parking spot number, signage, shrubbery, structures of the building, etc. The embeddings may be translated into a numerical or alpha-numerical representation of the features of the image.

The server 330 may be equipped with or communicate with a convolutional neural network (CNN) model to build the embeddings, such as MobileNetV2, ResNet, GPipe, EfficientNet, or other comparable programs. The CNN model may automatically generate a unique embedding for each reference image. The server 330 may adjust the number of parameters analyzed in the images. The more parameters analyzed, the more accurate or detailed the embeddings may be. For images that are largely similar, it may be necessary for the server 330 to automatically increase the number of parameters to distinguish the nuances between the reference images. In some examples, the user may manipulate the number of parameters analyzed by the CNN model.

The server 330 may collect the reference images into an embedding network or dictionary. The embedding network may store the reference images and the embeddings associated with the reference images. The embedding network may associate additional metadata with the reference images, such as time, geo-location and date captured. The embedding network may be further indexed based on similar features or associated geographic locations, described more fully herein. As described more fully below, this organization of the embedding network may facilitate a more efficient vehicle location system, as the system may only consider a portion of embeddings of the network that contain similar features to the real-time image. As a result, the embedding network may conserve time and computer resources.

The server 330 may organize the embeddings together based on similar features. For example, the CNN model may use an algorithm to cluster together embeddings of reference images with similar or identical features and determine that the reference images were taken at the same geographic location. This may facilitate faster processing of the embeddings when comparing real-time images, such that only a handful of images would need to be analyzed based on detected features in the real-time image.

The calibration system 300 may receive feedback from the user regarding the accuracy of the groupings, and in response the association of reference images may be adjusted. For example, a user may review the automatic groupings and change what geographic location a group of reference images are associated with.

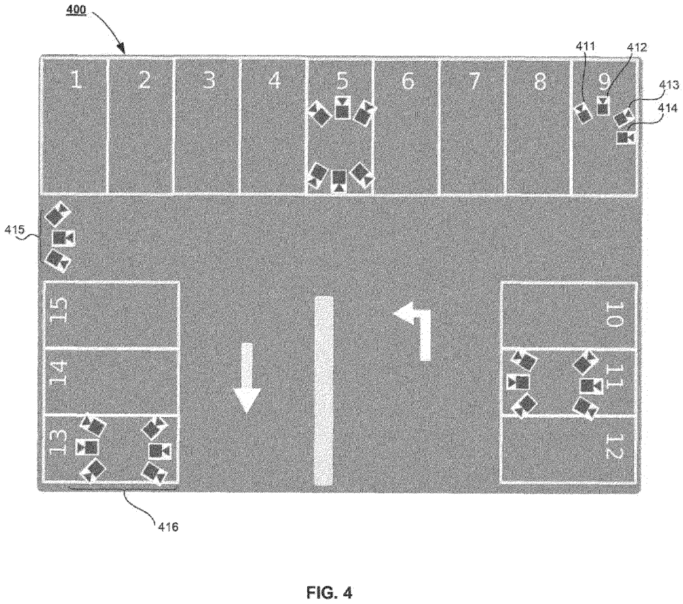

FIG. 4 illustrates a pre-calibrated map 400 according to aspects of the disclosure. The map may be comprised of groups of reference images associated to geographic locations within a close proximity of each other, such as the reference images taken at angles 411-416depicted by camera icons. The map 400 may be configured according to methods described herein.

Reference images may be indexed based on their geographic location. According to some examples, the system may receive input from the user regarding the geographic location associated with the reference images. The system may use such input to inform which embeddings are related to each other or were taken at the same geographic location. For example, the user may select where on a preexisting map the reference images were captured. The system may store that input and associate the reference images with that geographic location. For example, the reference images may be manually indexed to their geographic location.

According to some examples, the system may automatically determine geographic location where the reference images were captured. The system may use training data, such as previously uploaded images, similar images from a network, identifiable landmarks within the reference images, etc. For example, a group of reference images that were taken at the same geographic location, such as multiple images of the same parking spot, may be associated with each other based on identical features within the images. The grouping of images may be correlated with a particular geographic location. For example, the system may determine that the series of reference images captured at the angles 411-416 contain the same features and should be associated with each other.

In some examples, the system may determine a baseline of similarity to associate the reference images. Each image embedding may contain overall scene semantics, such that the system may distinguish between reference images taken at proximate or geographically close locations. The scene semantics of the reference images may assist the system in distinguishing nuances between visually similar or proximally located reference images. For example, the system may determine that some of the reference images from angle 416 share similar features to the reference images captured at angle 415. However, the system may determine that only the reference images taken at angle 416 have met the similarity baseline to have been captured at the same spot.

The system may utilize the determined geographic locations to construct pre-calibrated map 400. Multiple designated areas may be associated with each other to create the map 400. Specifically, embeddings associated with distinct geographic locations may be plotted with respect to each other. For example, if multiple reference images are uploaded of several parking spots within a parking lot, the system may recognize the parking spaces are within proximity or within the same structure, such as a parking garage.

As depicted in FIG. 4, the system may determine that the reference images taken at parking space 9, at angles 411-414, and reference images taken at angles 415 and 416 were captured at the same relative location. This relative location may be used to generate map of a parking lot, wherein each of the parking spots is plotted as they exist in the physical space.

In some examples, if the system determines the real-time embedding is not similar to any reference images, the system may automatically determine the vehicle is not in a parking spot or within the parking structure.

In some examples, the system may be capable of distinguishing between reference images taken at a parking spot and areas outside of a parking spot. For example, the system may determine that reference images taken at angles 411-414 and 416 were taken at two distinct parking spaces and that reference images taken at angle 415 were taken in a lane of the parking lot. In some examples, the embeddings based on reference images taken outside of a parking space, such as images taken at angle 415, may be used to determine the trajectory of a vehicle through the parking lot.

Once the system has generated the embeddings of the reference images, the system may perform space analytics for an object within a designated area. The space analytics may be automatically performed by the system.

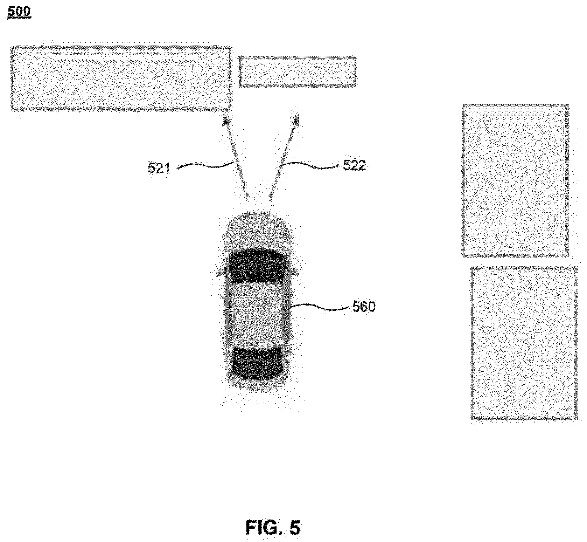

FIG. 5 illustrates a vehicle detection system 500 including a camera system at which real-time images at various angles, 521 and 522, may be captured by vehicle 560. The system 500 may collect real-time images using the camera system associated with vehicle 560. The system 500 may collect real-time images using method described herein.

The system 500 may determine the location of an object by utilizing performing space analytics. The object may be any movable object equipped with a camera system, such as the vehicle 560. The camera system may include one or more cameras. The cameras of the camera system may be oriented such that they may capture various angles, such as angles 521 and 522.

In some examples, the vehicle 560 may be equipped with an in-vehicle camera system. The vehicle camera system may be connected to an android automatic operating processor within the system. In some examples, the vehicle 560 may be connected to camera system separate image capturing device, such as a mobile phone or tablet. For example, the user may orient a mobile phone on the dashboard of the vehicle 560, such that the mobile phone may capture real-time images. The real-time images may be associated with the user or the vehicle 560 and communicated to the vehicle detection system.

A vehicle owner may grant the system access to its camera system. In some examples, the user may manually activate the camera system. In some examples, the access may be locationally limited, such that the system may only access the camera system when the vehicle 560 approaches the designated areas. In some examples, the system 500 may activate the camera system when the vehicle 560 enters a specific radius of the system 500 or a designated area. For example, the system 500 may detect when the vehicle 560 within a 500-foot radius of the parking lot associated with the system 500 and activate the camera system to begin collecting real-time images.

The camera system may collect real-time images once the vehicle 560 has entered the radius of the designated area. In some examples, the camera system may selectively send or upload real-time images to the server. For example, the system 500 may be programmed to detect when a vehicle has stopped moving, i.e., the vehicle 560 is parked, and send the real-time image of where the vehicle 560 is parked to the server.

The camera system may take multiple pictures once the vehicle is stopped. For example, the camera system may include four cameras positioned to capture the perimeter of the vehicle, the automatic operating processor within the system may cause all of the cameras to capture real-time images.

In some examples, the system 500 may be used while the vehicle 560 is in motion to track the trajectory of the vehicle 560. For example, the system may be programmed to detect when a vehicle has entered the vicinity captured within the pre-calibrated map. The system 500 may further activate the camera system to take real-time images as the vehicle 560 moves through the area of the pre-calibrated map.

Real-time images may be uploaded to a server of the system used to generate embeddings for the real-time images. The server may use the same or similar CNN models to generate the real-time embeddings. The system may generate one embedding for each real-time image.

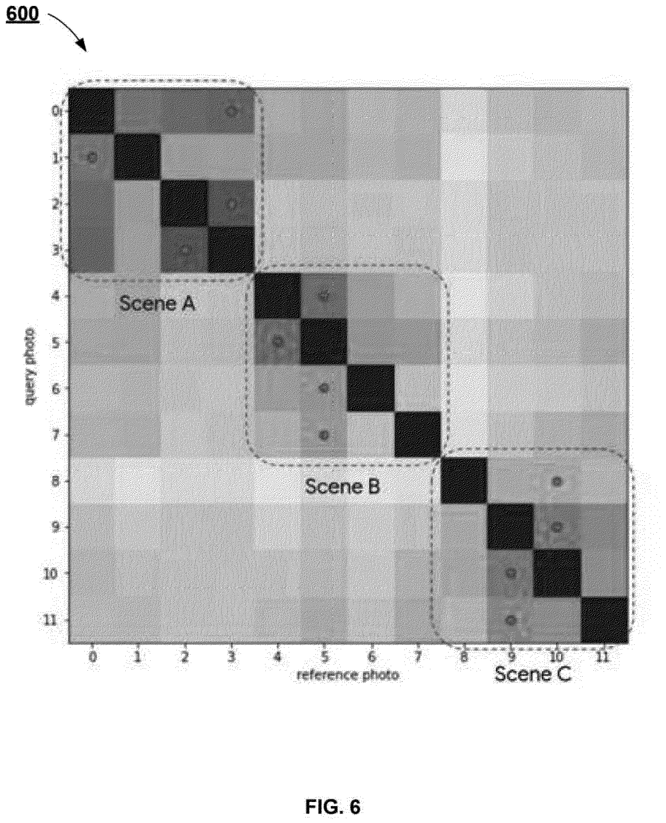

Figure 6 illustrates an example of a vehicle detection system building an embedding distance model including an embedding distance chart 600. The embedding distance model may compare the real-image embeddings may be compared to the reference image embedding network.

The vehicle detection system may determine which reference image most closely resembles a real-time image using an embedding distance model. The embedding distance model may compare the embeddings of the reference images to the embedding of the real-time image. The system may use CNN models and/or a K-nearest neighbor (KNN) algorithm to determine which reference image is most similar to the real-time image.

The system may use the organization of the embedding network to efficiently determine which reference images may be matched with real-time embeddings. The system may select a portion of the network based on the detected features of the real-time embeddings. For example, the system may detect a feature, such as a landmark visible from a window near the parking space, in the real-time image embedding. The system may then select groupings of embeddings based on reference images that contain the detected feature. The system may also select groupings of reference image embeddings that are associated with the geographic location near the embeddings containing the detected features. The embedding distance model may use the selected groupings from the reference embedding network to compare to the real-time embeddings first.

The system may be configured to have a threshold of embedding distance score, wherein any score below the threshold may be considered a match with the reference image. In some examples, the threshold may be computed by one or more of the processors empirically using a validation dataset.

The embedding model may calculate an embedding distance score for each comparison. The higher the value of the embedding distance score, the more different the real-time image is from the reference image the embedding is based on. The lower the value of the embedding distance score, the more detected similarities between the real-time image and the reference image the embedding is based on.

Embedding distance scores may be mapped or charted based on the value of the embedding distances. The chart may resemble embedding distance chart 600, depicted in Fig. 6. Embedding distance chart 600 depicts one embedding being compared at a time. An embedding represented by each column index may be considered a real-time embedding. In some examples, one axis of chart 600 relates to the reference image embeddings (e.g., the horizontal axis) and the other axis relates to one real-time image embeddings (e.g., the vertical axis). On chart 600, each row may correspond to one detected feature of the reference image embeddings. One reference image may require multiple rows of the embedding distance chart. The darker grid squares on the embedding distance chart are used to provide an indication of a perfect or near perfect match to a feature in the reference image embedding. The dots on chart 600 illustrate the embedding distance of each feature of the real-time image embedding when compared to the reference image embedding. The closer the dot is to the darkest grid square the more similar the features of the real-time image embedding are to the reference image embedding.

The system may determine the approximate location of the vehicle based lowest embedding distance score. For example, the real-time image captured by the camera system when the vehicle has parked will be compared to each embedding of the reference images and an embedding distance score will be calculated for each comparison. The system may determine the lowest embedding score and estimate the vehicle is located at the location associated with the lowest embedding score reference image.

The system may store the real-time images to further inform the embedding network. Once the system has determined the approximate location of where the real-time images were captured, the real-time embeddings may be categorized as reference image embeddings to be compared to future real-time images. In some examples, where the system is unable to determine the estimate location of where the real-time images were taken due to a lack of reference images captured at the particular designated area, the system may store the real-time images and treat the real-time images as reference images for future use. For example, if the system lacks reference images of a parking space, the embedding distance model may not generate an embedding distance score below the determined threshold. In this scenario, the system may store the real-time images as reference images of the previously, uncalibrated parking space, such that any future real-time images may be compared to the present real-time images.

FIG. 7 illustrates a parking availability map 700 updated by the embedding distance model. The approximate locations of each vehicle are stored and displayed on the map 700. The map 700 depicts multiple vehicles, 760-765 and multiple parking spaces 1-15.

Once the vehicle detection system estimates the location of the vehicle based on the lowest embedding distance score, the system may update the pre-calibrated map to reflect the location of the vehicle. For example, the embeddings based on the reference images taken at parking space 9 likely generated the lowest embedding distance score based on the real-time images from vehicle 760.

In some examples, the reference images taken at one designated area may be used to locate a vehicle in the surrounding area. The vehicle detection system may use features and the geographic location of a grouping of reference images to approximate the location of a vehicle near a designated area. The system may identify identical features from those reference images and a variation in scale of the features in the real-time images, such that the features are further away than the reference images. For example, the system may use embeddings based on reference images taken at parking space 13 to locate vehicle 763 in parking spaces 14.

In some examples, the vehicle detection system may detect a vehicle that is still in motion or not in a parking space. For example, reference images may be taken outside of parking space area, such as the lanes of the parking lot. The system may run the embedding distance model on a real-time embedding from a moving vehicle. For example, the vehicle detection system may run the embedding distance model on moving vehicle 761. In such an example, the system may track the trajectory of moving vehicle 761 as it moves throughout the parking lot depicted by map 700.

The parking availability map 700 may be output to an external device. For example, the system may output an updated parking availability map 700 to a parking lot owner, to communicate information about the usage of the parking spaces. In some examples, the map 700 may be output to mobile devices. For example, the map 700 may be output to a mobile device, such as a cell phone via an application, such that a vehicle owner may access information regarding the parking lot availability. Further, in some examples, the map 700 may be output to an application on a vehicle's infotainment system, such that a vehicle owner may access information regarding the parking lot availability. The system may update the map of the parking lot to reflect that parking space 5 is unavailable. This information may be used by other vehicle owners to determine if there is availability to park in the parking lot and by the owners to monitor usage of the parking spots.

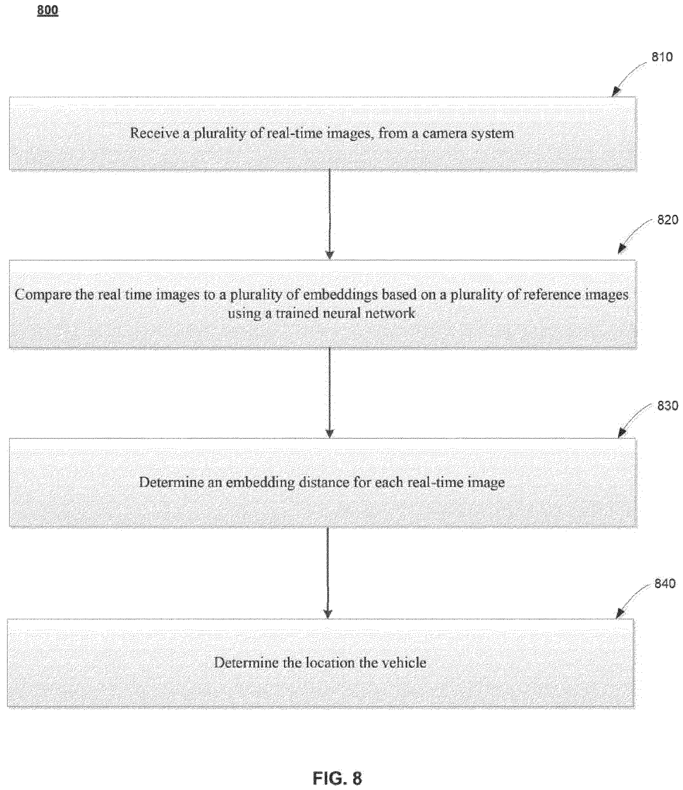

FIG. 8 is a flow diagram of an example method 800 of using reference images to determine vehicle location based on embedding distance models. The method 800 may be performed by one or more servers, a separate controller device, a device associated with a vehicle, or any combination of such devices. While the operations are illustrated and described in a particular order, it should be understood that the order may be modified and that operations may be added or omitted.

In block 810, the system may receive a plurality of real-time images, from a camera system. The camera system may be an in-vehicle camera system or an external camera system associated with a vehicle. The real time images may be captured by the camera system when the vehicle has parked or when the vehicle is in motion. The real-time images may be converted into embeddings.

In block 820, the system may compare the features of the real-time images to a plurality of embeddings based on a plurality of reference images using a trained neural network. The reference images may be uploaded to a server of the system by a user. The user may capture the reference images of a designated area, wherein the designated area may be a parking spot. The reference image may train a neural network to detect features within the reference images and sort the images by similar features. The reference images may be associated with a geographic location. The reference images may be converted into embeddings.

In block 830, the system may determine an embedding distance for each real-time image. Using an embedding distance model, the system may compare the reference image embeddings and the real-time image embeddings. Each comparison may yield an embedding distance score.

In block 840, the system may determine the location of the vehicle. The comparison with the lowest embedding distance score may be used to approximate the location of the vehicle. This location may be used to update a parking availability map.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements. Also disclosed herein are the following numbered clauses:
Clause 1. A method, executed by one or more processors, comprising:
   receiving, from a vehicle camera system associated with a vehicle, a plurality of real-time images associated with an area at which the vehicle is located;
   converting, by one or more processors, the plurality of real-time images into a plurality of real-time image embeddings, based on features within each of the real-time images;
   comparing, by the one or more processors using a trained neural network model, the plurality of real-time embeddings to a plurality of reference image embeddings, wherein the reference image embeddings are based on features within a plurality of reference images;
   determining, by the one or more processors, an embedding distance for each real-time image embedding based on the comparison with the plurality of reference embeddings; and
   determining, by one or more of the processors based on the embedding distance, a location of the vehicle.
Clause 2. The method of clause 1 further comprising generating a map of a physical area captured by the plurality of reference images.
Clause 3. The method of clause 2, further comprising updating the map based on the determined location of the vehicle.
Clause 4. The method of clause 1, wherein the one or more processors train the neural network model by:
   receiving the plurality of reference images;
   associating, by one or more processors, a physical location to each reference image; and
   training, by one or more of the processors, the neural network model, using the plurality of reference images to generate the plurality of reference image embeddings.
Clause 5. The method of clause 1, wherein the plurality of reference images are images captured of a designated area.
Clause 6. The method of clause 5, wherein the plurality of reference images comprise various angles of the designated area.
Clause 7. The method of clause 5, wherein the system activates the vehicle camera system when the vehicle enters a radius of the designated area.
Clause 8. The method of clause 7, wherein the vehicle camera system selectively sends the real-time images to one or more of the processors when the vehicle is not in motion.
Clause 9. The method of clause 1, wherein the reference images are indexed based on a geographic location where the reference images were captured.
Clause 10. A system, comprising:
   a memory; and
   a plurality of processors, configured to:
      collect, by a vehicle camera system, a plurality of real-time images associated with an area at which a vehicle is located;
      convert, by one or more processors, the plurality of real time images into a plurality of real-time image embeddings, based on the features within each of the real-time images;
      compare, by one or more of the processors using the trained neural network model, the plurality of real-time image embeddings to a plurality of reference image embeddings, wherein the reference image embeddings are based on features within a plurality of reference images;
      determine, by one or more processors, an embedding distance for each real-time image embedding based on the comparison with the plurality of reference embeddings; and
      determine, by one or more processors based on the embedding distance, a location of the vehicle.
Clause 11. A system of clause 10, wherein the plurality of processors are further configured to generate a map of a physical area captured by the plurality of reference images.
Clause 12. A system of clause 11, wherein the one or more processors are further comprised to update the map based on the determined location of the vehicle.
Clause 13. A system of clause 10, wherein the one or more processors are further configured to train the neural network model by:
   receiving the plurality of reference images;
   associating, by one or more processors, a physical location to each reference image; and
   training, by one or more of the processors, the neural network model, using the plurality of reference images to generate the plurality of reference image embeddings.
Clause 14. The system of clause 10, wherein the plurality of reference images are images captured of a designated area,
   wherein the plurality of reference images comprise various angles of the designated area.
Clause 15. The system of clause 14, wherein the system activates the vehicle camera system when the vehicle enters a radius of the designated area.
Clause 16. The system of clause 15, wherein the camera system is further configured to selectively send real-time images to the one or more processors when the vehicle is not in motion.
Clause 17. The system of clause 10 wherein the reference images are indexed based on a geographic location where the reference images were captured.
Clause 18. A non-transitory computer readable medium storing instructions executable by one or more processors for performing a method of localization of a vehicle, the method comprising:
   collecting, by a vehicle camera system associated with a vehicle, a plurality of real-time associated with an area at which the vehicle is located;
   converting, by the one or more processors, the plurality of real-time images into a plurality of a real-time image embeddings, based on the features within each of the real-time images;
   comparing, by one or more processors using the trained neural network model, the real-time image embeddings to a plurality of reference image embeddings, wherein the reference image embeddings are based on features within a plurality of reference images;
   determining, by one or more processors, an embedding distance for each real-time image embedding based on the comparison with the plurality of reference embeddings; and
   determining, by one or more processors based on the embedding distance, the location of the vehicle.
Clause 19. The non-transitory computer readable medium storing instructions of clause 18, further comprising generating a map of a physical area captured by the plurality of reference images.
Clause 20. The non-transitory computer readable medium storing instructions of clause 19, further comprising updating the map based on the determined location of the vehicle.

## Claims

1. A method, executed by one or more processors, comprising:
receiving, from a vehicle camera system associated with a vehicle, a plurality of real-time images associated with an area at which the vehicle is located;
converting, by one or more processors, the plurality of real-time images into a plurality of real-time image embeddings, based on features within each of the real-time images;
comparing, by the one or more processors using a trained neural network model, the plurality of real-time embeddings to a plurality of reference image embeddings, wherein the reference image embeddings are based on features within a plurality of reference images;
determining, by the one or more processors, an embedding distance for each real-time image embedding based on the comparison with the plurality of reference embeddings; and
determining, by one or more of the processors based on the embedding distance, a location of the vehicle.

2. The method of claim 1 further comprising generating a map of a physical area captured by the plurality of reference images.

3. The method of claim 2, further comprising updating the map based on the determined location of the vehicle.

4. The method of any preceding claim, wherein the one or more processors train the neural network model by:
receiving the plurality of reference images;
associating, by one or more processors, a physical location to each reference image; and
training, by one or more of the processors, the neural network model, using the plurality of reference images to generate the plurality of reference image embeddings.

5. The method of any preceding claim, wherein the plurality of reference images are images captured of a designated area.

6. The method of claim 5, wherein the plurality of reference images comprise various angles of the designated area.

7. The method of claim 5 or 6, wherein the system activates the vehicle camera system when the vehicle enters a radius of the designated area.

8. The method of any preceding claim, wherein the vehicle camera system selectively sends the real-time images to one or more of the processors when the vehicle is not in motion.

9. The method of any preceding claim, wherein the reference images are indexed based on a geographic location where the reference images were captured.

10. A system, comprising:
a memory; and
a plurality of processors, configured to perform the method of any preceding claim.

11. A non-transitory computer readable medium storing instructions executable by one or more processors for performing the method of any one of claims 1 to 9.
